# FASCICULE DE BREVET EUROPEEN

(11) **EP 4 426 589 B1**
(45) Date de publication et mention de la délivrance du brevet: **25.06.2025**
(21) Numéro de dépôt: 22814476.2
(22) Date de dépôt: 06.10.2022
(51) Int. Cl.: B60R 19/18

(54) **DISPOSITIF D'ABSORPTION À EXTRÉMITÉS DE TRAVERSE INOFFENSIVES, POUR UN VÉHICULE TERRESTRE**
ABSORPTIONSVORRICHTUNG MIT SICHEREN QUERTRÄGERENDEN FÜR EIN LANDFAHRZEUG
ABSORPTION DEVICE WITH SAFE CROSSMEMBER ENDS, FOR A LAND VEHICLE

(30) Priorité: 04.11.2021 FR 2111742
(43) Date de publication de la demande: 11.09.2024
(73) Titulaire: Stellantis Auto SAS, 78300 Poissy (FR)
(72) Inventeur: PERON, Rodolphe, 95220 HERBLAY (FR); ROYER, Guillaume, 91680 BRUYERES LE CHATEL (FR)
(74) Mandataire: BCIP
(86) Numéro de dépôt international: PCT/FR2022/051890
(87) Numéro de publication internationale: WO 2023/079222

(56) Documents cités:
- EP-A1- 1 336 536
- US-A1- 2007 029 824

## Description

### Domaine technique de l'invention

L'invention concerne les véhicules terrestres, et plus précisément les dispositifs d'absorption qui sont destinés à équiper des parties avant ou arrière de véhicules terrestres.

### Etat de la technique

Certains véhicules terrestres, généralement de type automobile, comprennent une partie avant et/ou une partie arrière comportant un dispositif d'absorption de choc masqué par une peau et faisant partie d'un pare-chocs ou d'un bouclier. Ce dispositif d'absorption comprend une traverse (ou poutre) installée transversalement et à laquelle sont solidarisés fixement deux absorbeurs d'énergie ayant des extrémités couplées au véhicule. En cas de choc subi par la traverse, ces absorbeurs d'énergie sont agencés de manière à comprimer leur matière suivant la direction longitudinale du véhicule, généralement en formant des plis, afin d'absorber une partie au moins de l'énergie de ce choc.

La traverse de certains de ces dispositifs d'absorption comprend des extrémités droite et gauche opposées et comportant chacune une face avant et une face latérale d'extrémité délimitée par des premières arêtes dont une est commune avec la face avant.

La traverse est entièrement masquée par une peau de pare-chocs située à proximité de sa face avant et de ses deux faces latérales d'extrémité. Par conséquent, lors d'un choc latéral dit « de réparabilité » survenant à faible vitesse (typiquement inférieure à 20 km/h) et sous une faible incidence (typiquement selon un angle de 10° par rapport à la direction longitudinale du véhicule), la peau de pare-chocs peut être pressée contre les premières arêtes. Lorsque ces premières arêtes résultent d'une coupe franche qui les rend vives ou tranchantes, elles peuvent marquer la peau de pare-chocs en induisant au moins une zone convexe et/ou au moins une coupure en au moins un endroit. Dans tous les cas la résistance de la peau de pare-chocs est réduite et l'aspect (zone(s) convexe(s) et/ou coupure(s)) inesthétique. De plus, certaines coupures peuvent s'étendre et provoquer un détachement partiel ou total de la peau de pare-chocs potentiellement dangereux. Il est donc recommandé de remplacer la peau de pare-chocs endommagée par des premières arêtes, ce qui nécessite un passage dans un service aprèsvente et s'avère relativement onéreux.

Par ailleurs, lorsque la traverse est un profilé, sa face avant peut comprendre au moins une rainure s'étendant entre les faces latérales d'extrémité opposées et délimitée par deux secondes arêtes. Par conséquent, lors d'un choc frontal survenant à faible vitesse (typiquement inférieure à 20 km/h), la peau de pare-chocs peut être pressée contre la face avant de la traverse, et donc les secondes arêtes peuvent marquer la peau de pare-chocs en induisant au moins une zone convexe et/ou au moins une coupure en au moins un endroit. Il en résulte de nouveau une diminution de la résistance de la peau de pare-chocs et un aspect inesthétique. De plus, comme dans le cas d'un choc latéral de réparabilité, certaines coupures peuvent s'étendre et provoquer un détachement partiel ou total de la peau de pare-chocs potentiellement dangereux, si bien qu'il est recommandé de remplacer la peau de pare-chocs endommagée.

L'invention a donc notamment pour but d'améliorer la situation. Le document US 2007/029824 A1 divulgue un dispositif d'absorption destiné à équiper un véhicule terrestre correspondant au préambule de la revendication 1.

### Présentation de l'invention

Elle propose notamment à cet effet un dispositif d'absorption destiné à équiper un véhicule terrestre et comprenant les caractéristiques de la revendication 1.

Grâce à l'invention, une fois la traverse entièrement masquée par une peau de pare-chocs, les premières ailes d'extrémité sont intercalées entre la peau de pare-chocs et les faces latérales d'extrémité correspondantes, et donc lors d'un choc latéral de réparabilité la peau de pare-chocs ne risque plus d'être pressée contre les premières arêtes qui sont donc désormais inoffensives puisqu'elles ne peuvent plus marquer la peau de pare-chocs.

Le dispositif d'absorption selon l'invention peut comporter d'autres caractéristiques qui peuvent être prises séparément ou en combinaison, et notamment :
- chaque première aile d'extrémité peut être sensiblement parallèle à la face latérale d'extrémité correspondante ;
- chaque partie principale peut être prolongée par une aile supérieure repliée au-dessus d'au moins une partie d'une face supérieure de l'extrémité correspondante, prolongeant la face avant, afin de définir un écran de protection au-dessus de cette face supérieure ;
- en présence de la dernière option, chaque aile supérieure peut comprendre un bord solidarisé à la face supérieure par au moins un cordon de soudure ;
- également en présence de la dernière option, chaque aile supérieure peut être sensiblement parallèle à la face supérieure ;
- chaque partie principale peut être prolongée par une aile inférieure repliée en-dessous d'au moins une partie d'une face inférieure de l'extrémité correspondante, prolongeant la face avant, afin de définir un écran de protection en-dessous de cette face inférieure ;
la face avant de la traverse peut comprendre deux rainures s'étendant entre les faces latérales d'extrémité opposées et délimitées chacune par deux secondes arêtes. Dans ce cas, chaque seconde aile d'extrémité peut être munie de deux sous-parties destinées à être logées au moins partiellement et respectivement dans les rainures correspondantes lors d'un enfoncement de sa plaque externe en direction de la traverse, afin de maintenir la partie principale à distance des secondes arêtes.

L'invention propose également un véhicule terrestre, éventuellement de type automobile, et comprenant au moins un dispositif d'absorption du type de celui présenté ci-avant.

Par exemple, le véhicule peut comprendre une partie arrière comportant le dispositif d'absorption.

### Brève description des figures

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »)), sur lesquels :
[Fig. 1] illustre schématiquement, dans une vue en perspective du côté de la face avant, un exemple de réalisation d'un dispositif d'absorption selon l'invention, avant la solidarisation des plaques externes et donc avant qu'il n'équipe une partie arrière d'un véhicule terrestre,
[Fig. 2] illustre schématiquement, dans une vue en perspective du côté de la face avant, la partie droite du dispositif d'absorption de la figure 1, une fois la plaque externe droite solidarisée à l'extrémité droite de la traverse,
[Fig. 3] illustre schématiquement, dans une vue en perspective, la plaque externe droite de la figure 2, avant qu'elle ne soit solidarisée à l'extrémité droite d'une traverse, et
[Fig. 4] illustre schématiquement, dans une vue en coupe dans un plan longitudinal et vertical, la partie droite du dispositif d'absorption de la figure 1, une fois la plaque externe droite solidarisée à l'extrémité droite de la traverse.

### Description détaillée de l'invention

L'invention a notamment pour but de proposer un dispositif d'absorption DA destiné à être masqué par une peau et à faire partie d'un pare-chocs ou d'un bouclier destiné à être installé dans une partie avant ou arrière d'un véhicule terrestre.

Dans ce qui suit, on considère, à titre d'exemple non limitatif, que le dispositif d'absorption DA est destiné à faire partie d'un véhicule terrestre de type automobile, comme par exemple une voiture. Mais l'invention n'est pas limitée à ce type de véhicule terrestre. Elle concerne en effet tout véhicule terrestre comprenant une partie avant ou arrière devant comporter un dispositif d'absorption.

Par ailleurs, on considère dans ce qui suit, à titre d'exemple non limitatif, que le dispositif d'absorption DA est destiné à faire partie d'un pare-chocs ou d'un bouclier, lui-même destiné à être installé dans une partie arrière d'un véhicule automobile. Mais le dispositif d'absorption DA peut aussi être destiné à faire partie d'une partie avant d'un véhicule terrestre.

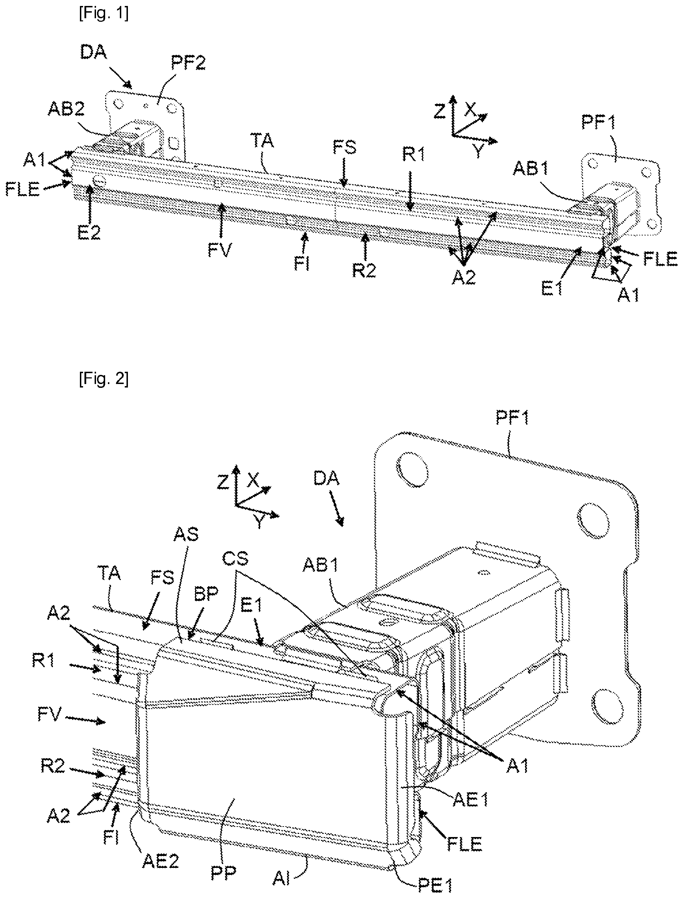

Sur les figures 1 à 4 la direction X est la direction longitudinale du véhicule, laquelle est parallèle aux côtés latéraux comportant les portières latérales, la direction Y est la direction transversale du véhicule, laquelle est perpendiculaire à la direction longitudinale X, et la direction Z est la direction verticale du véhicule, laquelle est perpendiculaire aux directions longitudinale X et transversale Y.

On a schématiquement illustré sur la figure 1 une partie d'un exemple de réalisation d'un dispositif d'absorption DA selon l'invention, avant la solidarisation des plaques externes PEj et donc avant qu'il n'équipe une partie (ici arrière) d'un véhicule terrestre (ici automobile).

Comme illustré au moins partiellement sur les figures 1 et 2, un dispositif d'absorption DA, selon l'invention, comprend notamment une traverse TA et deux plaques externes PEj droite (j = 1) et gauche (j = 2). Il comprend aussi deux absorbeurs d'énergie ABj droit (j = 1) et gauche (j = 2).

La traverse TA a sa plus grande extension suivant la direction transversale Y du véhicule. Elle est de préférence réalisée en métal, par exemple en acier ou en aluminium, et se présente de préférence sous la forme d'un profilé. Par ailleurs, la traverse TA comprend notamment une face avant FV destinée à être orientée vers une peau de pare-chocs (ou bouclier) et prolongée dans sa partie supérieure par une face supérieure FS et dans sa partie inférieure par une face inférieure FI opposée à la face supérieure FS.

De plus, la traverse TA comporte deux extrémités Ej (l'une droite E1 et l'autre gauche E2), opposées entre elles, et auxquelles sont solidarisées par soudage et respectivement les deux plaques externes PEj. Chacune des extrémités Ej comporte une face latérale d'extrémité FLE qui est délimitée par des premières arêtes A1 dont une est commune avec la face avant FV de sa traverse TA. Par exemple, chaque face latérale d'extrémité FLE est sensiblement perpendiculaire aux face avant FV, face supérieure FS et face inférieure FI. Ces premières arêtes A1 peuvent, par exemple, résulter d'une coupe franche d'un profilé dans lequel a été réalisée la traverse TA.

Chaque absorbeur d'énergie ABj est solidarisé fixement à l'une des deux extrémités Ej de la traverse TA, par exemple par soudage, et est destiné à être couplé au véhicule (ici à sa partie arrière, de préférence à une partie structurelle). Chaque absorbeur d'énergie ABj est de préférence réalisé en métal, par exemple en acier ou en aluminium.

Par exemple, et comme illustré non limitativement sur les figures 1 et 2, le couplage entre chaque absorbeur d'énergie ABj et la partie (ici arrière) du véhicule peut se faire via une platine de fixation PFj. Cette dernière (PFj) peut, par exemple, être soudée à l'une des extrémités de l'absorbeur d'énergie ABj associé et vissée sur la partie (ici arrière) du véhicule.

Chaque absorbeur d'énergie ABj est agencé de manière à comprimer sa matière suivant la direction longitudinale X du véhicule en cas de choc subi par la traverse TA.

Chaque plaque externe PEj est solidarisée par soudage à l'extrémité Ej correspondante en ayant une partie principale PP qui est placée devant la face avant FV et prolongée par une première aile d'extrémité AE1. Comme illustré sur la figure 2, chaque première aile d'extrémité AE1 est repliée devant au moins une partie de la face latérale d'extrémité FLE correspondante afin de définir un écran de protection devant une partie au moins des premières arêtes A1 de cette face latérale d'extrémité FLE (et notamment celle qui est commune aux face avant FV et face latérale d'extrémité FLE).

Ainsi, lorsque la traverse TA est entièrement masquée par une peau de pare-chocs située à proximité de sa face avant FV et de ses deux faces latérales d'extrémité FLE, les premières ailes d'extrémité AE1 sont intercalées entre la peau de pare-chocs et les faces latérales d'extrémité FLE correspondantes (et donc leurs premières arêtes A1). Par conséquent, lors d'un choc latéral de réparabilité la peau de pare-chocs ne risque plus d'être pressée contre les premières arêtes A1 (et notamment celle qui est commune aux face avant FV et face latérale d'extrémité FLE), et donc ces premières arêtes A1 sont désormais inoffensives puisqu'elles ne peuvent plus marquer la peau de pare-chocs.

Par exemple, chaque plaque externe PEj peut être réalisée en métal, et notamment en acier ou en aluminium.

De préférence, chaque première aile d'extrémité AE1 est sensiblement parallèle à la face latérale d'extrémité FLE correspondante. Cela permet en effet d'éviter de créer de nouvelles arêtes qui pourraient induire un marquage de la peau de pare-chocs.

Egalement par exemple, et comme illustré non limitativement et au moins partiellement sur les figures 2 à 4, chaque partie principale PP d'une plaque externe PEj peut être prolongée par une aile supérieure AS qui est repliée au-dessus d'au moins une partie de la face supérieure FS de l'extrémité Ej correspondante, afin de définir un écran de protection au-dessus de cette face supérieure FS.

Ainsi, lorsque la traverse TA est entièrement masquée par une peau de pare-chocs, l'aile supérieure AS est intercalée entre la peau de pare-chocs et la face supérieure FS (et donc l'arête située à l'interface entre les face avant FV et face supérieure FS). Par conséquent, lors d'un petit choc frontal (ici par l'arrière) la peau de pare-chocs ne risque plus d'être pressée contre l'arête située à l'interface entre les face avant FV et face supérieure FS, et donc cette arête est désormais inoffensive puisqu'elle ne peut plus marquer la peau de pare-chocs.

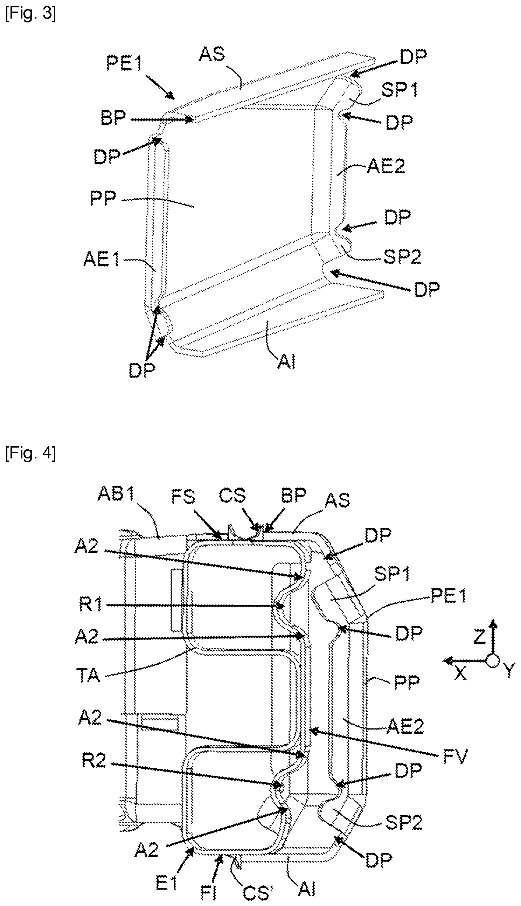

On notera, comme illustré non limitativement sur les figures 2 et 4, que chaque aile supérieure AS peut comprendre un bord BP solidarisé à la face supérieure FS par au moins un cordon de soudure CS. Chaque cordon de soudure CS est donc espacé par rapport à la face avant FV de l'extrémité Ej correspondante, ce qui permet de réduire sa sollicitation en cas de choc. On comprendra en effet qu'en éloignant chaque cordon de soudure CS de l'arête qui est située à l'interface entre la face supérieure FS et la face avant FV de l'extrémité Ej correspondante, en cas de choc subi par une plaque externe PEj son bord BP exerce une pression sur chaque cordon de soudure CS sensiblement dans le plan horizontal XY et non pas dans un plan sensiblement vertical YZ, évitant ainsi à la partie supérieure de cette plaque externe PEj de basculer vers l'arrière (ou vers l'absorbeur d'énergie ABj voisin). Il en résulte, en cas de choc subi par une plaque externe PEj, une moindre sollicitation de chaque cordon de soudure CS qui la solidarise à la face supérieure FS, et donc une très faible probabilité d'arrachement de chaque cordon de soudure CS et par conséquent une garantie quasi certaine que cette plaque externe PEj assurera correctement sa fonction.

On notera également que dans l'exemple illustré non limitativement sur la figure 2 le bord BP de chaque aile supérieure AS est solidarisé à la face supérieure FS par au moins deux cordons de soudure CS distants l'un de l'autre. Mais le nombre de cordons de soudure CS, assurant la solidarisation d'un bord BP à la face supérieure FS, peut prendre n'importe quelle valeur supérieure ou égale à un.

On notera également, comme illustré non limitativement sur la figure 4, que chaque cordon de soudure CS peut présenter une section en forme générale de triangle rectangle. Dans ce cas, l'angle droit (et donc la face sensiblement verticale) d'un cordon de soudure CS est situé(e) contre le bord BP de l'aile supérieure AS concernée, ce qui permet de maximiser la surface de contact de ce cordon de soudure CS avec le bord BP concerné, et donc de définir une butée de qualité pour ce dernier (BP). Mais chaque cordon de soudure CS pourrait présenter une section ayant d'autres formes générales, et notamment en L ou en rectangle.

De préférence, chaque aile supérieure AS est sensiblement parallèle à la face supérieure FS. Cela permet en effet d'éviter de créer de nouvelles arêtes qui pourraient induire un marquage de la peau de pare-chocs.

Egalement par exemple, et comme illustré non limitativement et au moins partiellement sur les figures 2 à 4, chaque partie principale PP d'une plaque externe PEj peut être prolongée par une aile inférieure AI qui est repliée en-dessous d'au moins une partie de la face inférieure FI de l'extrémité Ej correspondante, afin de définir un écran de protection en-dessous de cette face inférieure FI.

Ainsi, lorsque la traverse TA est entièrement masquée par une peau de pare-chocs, l'aile inférieure AI est intercalée entre la peau de pare-chocs et la face inférieure FI (et donc l'arête située à l'interface entre les face avant FV et face inférieure FI). Par conséquent, lors d'un petit choc frontal (ici par l'arrière) la peau de pare-chocs ne risque plus d'être pressée contre l'arête située à l'interface entre les face avant FV et face inférieure FI, et donc cette arête est désormais inoffensive puisqu'elle ne peut plus marquer la peau de pare-chocs.

On notera, comme illustré non limitativement sur la figure 4, que chaque aile inférieure AI peut comprendre un bord solidarisé à la face inférieure FI par au moins un cordon de soudure CS'. Chaque cordon de soudure CS' est donc espacé par rapport à la face avant FV de l'extrémité Ej correspondante, ce qui permet de réduire sa sollicitation en cas de choc pour une raison identique à celle évoquée plus haut pour le bord BP.

On notera également, comme illustré non limitativement sur la figure 4, que chaque cordon de soudure CS' peut présenter une section en forme générale de triangle rectangle, ce qui permet de maximiser sa surface de contact avec le bord concerné, et donc de définir une butée de qualité pour ce dernier. Mais chaque cordon de soudure CS' pourrait présenter une section ayant d'autres formes générales, et notamment en L ou en rectangle.

Conformément à l'invention, et comme illustré non limitativement sur les figures 1, 2 et 4, la face avant FV de la traverse TA comprend au moins une rainure Rk s'étendant entre les faces latérales d'extrémité FLE opposées et délimitée par deux secondes arêtes A2. La traverse peut ainsi être un profilé comportant des sous-parties supérieure et inférieure reliées entre elles par une paroi intermédiaire qui permet la définition d'un espace ouvert entre elles. Dans ce cas, et comme illustré non limitativement sur les figures 1 à 4, chaque partie principale PP est prolongée par une seconde aile d'extrémité AE2 qui est opposée à la première aile d'extrémité AE1 et repliée en direction de la face avant FV. De plus, chaque seconde aile d'extrémité AE2 est munie d'au moins une sous-partie SPk qui est destinée à être logée au moins partiellement dans une rainure Rk correspondante lors d'un enfoncement de sa plaque externe PEj en direction de la traverse TA. Cela permet avantageusement de maintenir la partie principale PP à distance des secondes arêtes A2, tout en limitant la probabilité qu'elle se déplace verticalement et donc qu'elle se déforme notablement. En outre, en cas de choc latéral de réparabilité chaque sous-partie SPk est contrainte de se translater dans la rainure Rk correspondante, ce qui limite la probabilité que la partie principale PP se déplace verticalement et donc qu'elle se déforme notablement.

On notera que dans l'exemple illustré non limitativement sur les figures 1, 2 et 4, la face avant FV de la traverse TA comprend deux rainures Rk (k = 1 ou 2) s'étendant entre les faces latérales d'extrémité FLE opposées et délimitées chacune par deux secondes arêtes A2. Dans ce cas, et comme illustré non limitativement sur les figures 1 à 4, chaque seconde aile d'extrémité AE2 peut être munie de deux sous-parties SPk destinées à être logées au moins partiellement et respectivement dans les rainures Rk correspondantes lors d'un enfoncement de sa plaque externe PEj en direction de la traverse TA, afin de maintenir la partie principale PP à distance des secondes arêtes A2. Cela permet de maintenir encore mieux la partie principale PP à distance des secondes arêtes A2, tout en limitant encore plus la probabilité qu'elle se déplace verticalement et donc qu'elle se déforme notablement. En outre, en cas de choc latéral de réparabilité les deux sous-parties SPk sont contraintes de se translater respectivement dans les deux rainures Rk correspondantes, ce qui limite encore plus la probabilité que la partie principale PP se déplace verticalement et donc qu'elle se déforme notablement.

Afin de faciliter la définition et le repliement des première aile d'extrémité AE1, aile supérieure AS, aile inférieure AI et seconde aile d'extrémité AE2 (avec chaque sous-partie SPk) de chaque plaque externe PEj, on peut réaliser des découpes DP dans la plaque dans laquelle est réalisée cette dernière (PEj). On notera, comme illustré non limitativement sur les figures 3 et 4, que la découpe DP réalisée entre l'aile supérieure AS et la seconde aile d'extrémité AE2 (et donc ici la première sous-partie SP1) peut être choisie de manière à permettre une inclinaison vers le bas de la première sous-partie SP1 par rapport à un plan horizontal XY. De même, et comme illustré non limitativement sur les figures 3 et 4, la découpe DP réalisée entre l'aile inférieure AI et la seconde aile d'extrémité AE2 (et donc ici la seconde sous-partie SP2) peut être choisie de manière à permettre une inclinaison vers le haut de la seconde sous-partie SP2 par rapport à un plan horizontal XY. Cela permet en effet aux première SP1 et seconde SP2 sous-parties, en cas de choc, de venir facilement se loger respectivement dans les première R1 et seconde R2 rainures.

Par ailleurs, et comme illustré non limitativement sur les figures 3 et 4, les découpes DP réalisées entre l'aile supérieure AS et la seconde aile d'extrémité AE2 et entre l'aile inférieure AI et la seconde aile d'extrémité AE2 peuvent être choisies de manière à permettre à la seconde aile d'extrémité AE2 de faire un angle choisi (non nul) par rapport à un plan vertical et longitudinal XZ. Cela permet en effet aux première SP1 et seconde SP2 sous-parties, en cas de choc, de venir s'écraser (ou s'aplatir) respectivement dans les première R1 et seconde R2 rainures sans être bloquées suivant la direction longitudinale X. Par exemple, cet angle peut être compris entre environ 20° et environ 25°.

## Revendications

1. Dispositif d'absorption (DA) destiné à équiper un véhicule terrestre et comprenant une traverse (TA) comportant des extrémités (Ej) opposées et comportant chacune une face avant (FV) et une face latérale d'extrémité (FLE) délimitée par des premières arêtes (A1) dont une commune avec ladite face avant (FV), comprenant en outre deux plaques externes (PEj) solidarisées par soudage et respectivement auxdites extrémités (Ej) en ayant chacune une partie principale (PP) placée devant ladite face avant (FV) et prolongée par une première aile d'extrémité (AE1) repliée devant au moins une partie de ladite face latérale d'extrémité (FLE) correspondante afin de définir un écran de protection devant une partie au moins desdites premières arêtes (A1), **caractérisé en ce que** ladite face avant (FV) comprend au moins une rainure (Rk) s'étendant entre lesdites faces latérales d'extrémité (FLE) opposées et délimitée par deux secondes arêtes (A2), et **en ce que** chaque partie principale (PP) est prolongée par une seconde aile d'extrémité (AE2) opposée à ladite première aile d'extrémité (AE1), repliée en direction de ladite face avant (FV) et munie d'au moins une sous-partie (SPj) destinée à être logée au moins partiellement dans une rainure (Rk) correspondante lors d'un enfoncement de sa plaque externe (PEj) en direction de ladite traverse (TA), afin de maintenir ladite partie principale (PP) à distance desdites secondes arêtes (A2).

2. Dispositif selon la revendication 1, **caractérisé en ce que** chaque première aile d'extrémité (AE1) est sensiblement parallèle à ladite face latérale d'extrémité (FLE) correspondante.

3. Dispositif selon la revendication 1 ou 2, **caractérisé en ce que** chaque partie principale (PP) est prolongée par une aile supérieure (AS) repliée au-dessus d'au moins une partie d'une face supérieure (FS) de l'extrémité (Ej) correspondante, prolongeant ladite face avant (FV), afin de définir un écran de protection au-dessus de cette face supérieure (FS).

4. Dispositif selon la revendication 3, **caractérisé en ce que** chaque aile supérieure (AS) comprend un bord (BP) solidarisé à ladite face supérieure (FS) par au moins un cordon de soudure (CS).

5. Dispositif selon la revendication 3 ou 4, **caractérisé en ce que** chaque aile supérieure (AS) est sensiblement parallèle à ladite face supérieure (FS).

6. Dispositif selon l'une des revendications 1 à 5, **caractérisé en ce que** chaque partie principale (PP) est prolongée par une aile inférieure (AI) repliée en-dessous d'au moins une partie d'une face inférieure (FI) de l'extrémité (Ej) correspondante, prolongeant ladite face avant (FV), afin de définir un écran de protection en-dessous de cette face inférieure (FI).

7. Dispositif selon l'une des revendications 1 à 6, **caractérisé en ce que** ladite face avant (FV) comprend deux rainures (Rk) s'étendant entre lesdites faces latérales d'extrémité (FLE) opposées et délimitées chacune par deux secondes arêtes (A2), et **en ce que** chaque seconde aile d'extrémité (AE2) est munie de deux sous-parties (SPj) destinées à être logées au moins partiellement et respectivement dans lesdites rainures (Rk) correspondantes lors d'un enfoncement de sa plaque externe (PEj) en direction de ladite traverse (TA), afin de maintenir ladite partie principale (PP) à distance desdites secondes arêtes (A2).

8. Véhicule terrestre, **caractérisé en ce qu'**il comprend au moins un dispositif d'absorption (DA) selon l'une des revendications précédentes.

9. Véhicule selon la revendication 8, **caractérisé en ce qu'**il comprend une partie arrière comportant ledit dispositif d'absorption (DA).

## Patentansprüche

1. Absorptionsvorrichtung (DA) zur Ausrüstung eines Landfahrzeugs, umfassend eine Traverse (TA) mit gegenüberliegenden Enden (Ej), die jeweils eine Vorderseite (FV) und eine seitliche Endfläche (FLE) aufweist, die durch erste Kanten (A1) begrenzt sind, von denen eine mit der Vorderseite (FV) gemeinsam ist, und die ferner zwei äußere Platten (PEj) aufweist, die durch Schweißen mit den Enden (Ej) verbunden sind, wobei jede einen Hauptteil (PP) aufweist, der vor der Vorderseite (FV) angeordnet ist und durch einen ersten Endflügel (AE1) verlängert ist, der vor mindestens einem Teil der seitlichen Endfläche gefaltet ist (FLE) zum Definieren einer Schutzabschirmung vor mindestens einem Teil der ersten Kanten (A1), **dadurch gekennzeichnet, dass** die vordere Fläche (FV) mindestens eine Nut (Rk) aufweist, die sich zwischen den gegenüberliegenden seitlichen Endflächen (FLE) erstreckt und durch zwei zweite Kanten (A2) begrenzt ist, und dass jeder Hauptteil (PP) durch einen zweiten Endschenkel (AE2) verlängert ist, der dem ersten Endschenkel (AE1) gegenüberliegt, in Richtung der vorderen Fläche (FV) gefaltet ist und mit mindestens einem Teilteil (SPj) versehen ist, der zumindest teilweise aufgenommen werden soll in einer entsprechenden Nut (Rk) beim Eindrücken ihrer Außenplatte (PEj) in Richtung des Querträgers (TA), um den Hauptteil (PP) in einem Abstand von den zweiten Kanten (A2) zu halten.

2. Vorrichtung nach Anspruch 1, **dadurch gekennzeichnet, dass** jeder erste Endschenkel (AE1) im Wesentlichen parallel zu der entsprechenden seitlichen Endfläche (FLE) ist.

3. Vorrichtung nach Anspruch 1 oder 2, **dadurch gekennzeichnet, dass** jeder Hauptteil (PP) durch einen oberen Flügel (AS) verlängert ist, der über mindestens einen Teil einer oberen Fläche (FS) des entsprechenden Endes (Ej) gefaltet ist und die vordere Fläche (FV) verlängert, um eine Abschirmung über dieser oberen Fläche (FS) zu bilden.

4. Vorrichtung nach Anspruch 3, **dadurch gekennzeichnet, dass** jeder obere Flügel (AS) einen Rand (BP) aufweist, der mit der oberen Fläche (FS) durch mindestens eine Schweißnaht (CS) verbunden ist.

5. Vorrichtung nach Anspruch 3 oder 4, **dadurch gekennzeichnet, dass** jeder obere Flügel (AS) im Wesentlichen parallel zu der oberen Fläche (FS) ist.

6. Vorrichtung nach einem der Ansprüche 1 bis 5, **dadurch gekennzeichnet, dass** jeder Hauptteil (PP) durch einen unteren Flügel (AI) verlängert ist, der unter mindestens einem Teil einer Unterseite (FI) des entsprechenden Endes (Ej) gefaltet ist und die Vorderseite (FV) verlängert, um eine Schutzabschirmung unter dieser Unterseite (FI) zu definieren.

7. Vorrichtung nach einem der Ansprüche 1 bis 6, **dadurch gekennzeichnet, dass** die vordere Fläche (FV) zwei Nuten (Rk) aufweist, die sich zwischen den gegenüberliegenden seitlichen Endflächen (FLE) erstrecken und jeweils durch zwei zweite Kanten (A2) begrenzt sind, und dass jeder zweite Endschenkel (AE2) mit zwei Unterabschnitten (SPj) versehen ist, die dazu bestimmt sind, wenigstens teilweise und jeweils in den entsprechenden Nuten (Rk) bei einem Eindrücken seiner äußeren Platte (PEj) in Richtung auf den Querträger (TA) untergebracht zu werden, um den Hauptabschnitt (PP) von den zweiten zu halten Kanten (A2).

8. Landfahrzeug, **dadurch gekennzeichnet, dass** es mindestens eine Absorptionsvorrichtung (DA) nach einem der vorhergehenden Ansprüche umfasst.

9. Fahrzeug nach Anspruch 8, **dadurch gekennzeichnet, dass** es einen hinteren Teil mit der Absorptionsvorrichtung (DA) aufweist.

## Claims

1. Absorption device (DA) intended to be fitted to a land vehicle and comprising a cross-member (TA) comprising opposite ends (Ej) and each comprising a front face (FV) and an end side face (FLE) delimited by first edges (A1) one of which is common with said front face (FV), further comprising two outer plates (PEj) joined by welding and respectively to said ends (Ej) each having a main part (PP) placed in front of said front face (FV) and extended by a first end wing (AE1) folded in front of at least a part of said end side face (FLE) in order to define a protective screen in front of at least a part of said first edges (A1), wherein said front face (FV) comprises at least one groove (Rk) extending between said opposite end lateral faces (FLE) and delimited by two second edges (A2), and wherein each main part (PP) is extended by a second end wing (AE2) opposite said first end wing (AE1), folded in management with said front face (FV) and provided with at least one sub-part (SPj) intended to be housed at least partially in a groove (Rk) corresponding when its outer plate (PEj) is pushed into management with said cross member (TA), in order to keep said main part (PP) at a distance from said second edges (A2).

2. Device according to claim 1, **characterised in that** each first end wing (AE1) is substantially parallel to said corresponding end side face (FLE).

3. Device according to Claim 1 or 2, **characterised in that** each main part (PP) is extended by an upper wing (AS) folded over at least one part of an upper face (FS) of the corresponding end (Ej), extending said front face (FV), in order to define a protective screen above this upper face (FS).

4. Device according to Claim 3, **characterised in that** each upper wing (AS) comprises an edge (BP) secured to the said upper face (FS) by at least one weld bead (CS).

5. Device according to Claim 3 or 4, **characterised in that** each upper wing (AS) is substantially parallel to the said upper face (FS).

6. Device according to one of Claims 1 to 5, **characterised in that** each main part (PP) is extended by a lower wing (Al) folded below at least one part of a lower face (FI) of the corresponding end (Ej), extending said front face (FV), in order to define a protective screen below this lower face (FI).

7. Device according to one of Claims 1 to 6, **characterised in that** the said front face (FV) comprises two grooves (Rk) extending between the said opposite end lateral faces (FLE) and each delimited by two second edges (A2), and **in that** each second end wing (AE2) is provided with two subparts (SPj) intended to be housed at least partially and respectively in the said corresponding grooves (Rk) when its outer plate (PEj) is pushed in at the management of the said cross-member (TA), in order to keep the said main part (PP) at a distance from the said second edges (A2).

8. Land vehicle, comprising at least one absorption device (DA) according to one of the previous claims.

9. Vehicle according to claim 8, comprising a rear part comprising said absorption device (DA).
